(19) Europäisches Patentamt
European Patent Office
Office européen des brevets

(11) EP 1 926 092 A1

(12) **EUROPEAN PATENT APPLICATION**
published in accordance with Art. 153(4) EPC

(43) Date of publication:
**28.05.2008 Bulletin 2008/22**

(21) Application number: **06781562.1**

(22) Date of filing: **25.07.2006**

(51) Int Cl.:
***G11B 7/0065*** *(2006.01)* ***G11B 7/09*** *(2006.01)*
***G03H 1/26*** *(2006.01)*

(86) International application number:
**PCT/JP2006/314650**

(87) International publication number:
**WO 2007/023635 (01.03.2007 Gazette 2007/09)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.08.2005 JP 2005243476**

(71) Applicant: **FUJIFILM Corporation**
**Minato-ku**
**Tokyo 106-8620 (JP)**

(72) Inventor: **USAMI, Yoshihisa**
**Ashigarakami-gun**
**Kanagawa 2588538 (JP)**

(74) Representative: **Grünecker, Kinkeldey,**
**Stockmair & Schwanhäusser**
**Anwaltssozietät**
**Leopoldstrasse 4**
**80802 München (DE)**

(54) **OPTICAL RECORDING METHOD, OPTICAL RECORDER, OPTICAL RECORDING MEDIUM AND OPTICAL RECORDING/REPRODUCING METHOD**

(57) The present invention aims to provide an excellent optical recording method, an optical recording apparatus, and an optical recording medium that provide higher efficiency of recording and reproducing and are uninfluenced by the mismatch of optical axes of plural laser lights induced from accident errors of optical recording and optical reproducing apparatuses when carrying out recording or reproducing or control of focus or tracking by use of a laser light, and layer construction of the recording medium itself is simple.

For the purpose, a optical recording method and the like are provided that comprise a step of detecting pattern position, in which at least one of an information light and a reference light is irradiated to an optical recording medium, and the pattern position is detected by a reflected light, wherein the optical recording medium comprises a recording layer that records information by use of holography and a pattern that contains at least track information and address information, and a step of recording an interference image, in which the optical axes of the information light and the reference light are displaced to a position other than the position of the pattern, the information light and the reference light are irradiated to the recording layer to form an interference image, and the interference image is recorded on the recording layer.

FIG. 1

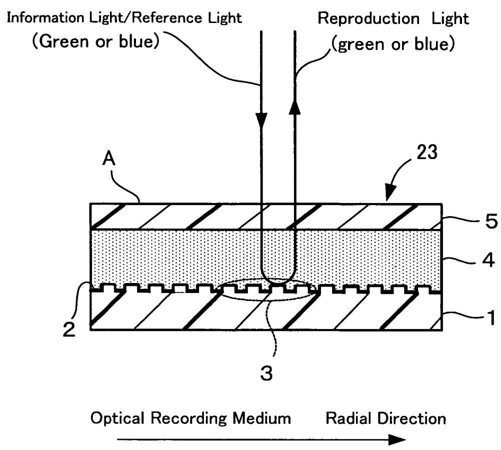


EP 1 926 092 A1

## Description

### Technical Field

The present invention relates to optical recording methods, optical recording apparatuses, and optical recording media in which information is recorded by use of holography, particularly to optical recording methods, optical recording apparatuses, and optical recording media in which focus control and/or tracking control can be carried out in a manner that an information light and a reference light are irradiated to an optical recording medium, which having a servo pit pattern for the focus control and/or tracking control, and a reflected light is detected.

### Background Art

In optical recording methods to record information on optical recording media by use of holography, the recording is typically carried out by way of causing interference between an information light of substance light, having image information, and a reference light and writing the interference fringes on the optical recording media. The optical recording method is exemplified by those of Collinear system in which the information light and the reference light are irradiated as a coaxial light beam. In the Collinear system, the interference fringes are formed by the information light and the reference light to record image information etc. on the recording layer. Reproduction of the recorded image information etc. is carried out by way of irradiating the light same with the reference light to the recording medium from the same direction with that at recording, i.e. the light irradiation forms a diffracted light from the interference fringes and the information is reproduced though receiving the diffracted light.

When recording or reproducing the image information, the focus points are controlled in terms of the light beam irradiation, by way of focus control or tracking control, in order to adjust interlayer distances of recording layers in optical recording media and accident errors of optical recording and optical reproducing apparatuses and to record the information at normal positions of the optical recording media.

The method to control the focus points is exemplified by those of sampled servo system, in which a servo light is irradiated to the optical recording media for the focus control or the tracking control and the position information like focus information or track information is detected from the reflected light for the light irradiation. On the basis of the control of the focus points, the information light and the reference light are irradiated at the normal positions of the optical recording media thereby the recording and the reproduction can be carried out (Patent Literatures 1 to 3).

The sampled servo system is exemplified specifically by the optical recording apparatus shown in FIG. 9. In the optical recording apparatus, a red light is used as the servo light, and laser lights of green etc. having a wavelength different from that of the servo light are used for the information light and the reference light for recording.

The servo light, which being reflected at a dichroic mirror 13, passes through an objective lens 12, and irradiates an optical recording medium 21 so as to focus on the reflective film 2. The dichroic mirror 13 transmits the lights of green and blue wavelengths and reflects the light of red wavelengths. The servo light incident from a light entrance/exit surface A of the optical recording medium 21 is reflected by the reflective film 2 to emit again from the light entrance/exit surface A. The emitted return light passes through the objective lens 12 and is reflected by the dichroic mirror 13, and then a servo information detector (not shown) detects servo information. The detected servo information is used for the focus servo, tracking servo, slide servo and the like. The recording layer 4 is designed so as to be insensitive to red light.

The information light and the reference light irradiate the optical recording medium 21 such that the information light and the reference light, which being controlled into an appropriate position by the servo, transmit through a polarizing element 16, a half mirror 17, and the dichroic mirror 13 and form an interference image in an recording layer 4 by the objective lens 12. When the information light and the reference light enter from the light entrance/exit surface A, they interact with each other at the recording layer 4 to form and record an interference image there, then transmit through the recording layer 4 and enter into a filter layer 6, and then, are reflected to turn into a return light before the bottom of the filter layer 6 without reaching the reflective film 2. The filter layer 6, which being a laminate of four layers of cholesteric liquid crystal, is designed to exclusively transmit red light.

In cases of optical recording apparatuses on the basis of the sampled servo system, however, only position information for light irradiation such as focus information and track information is detected in relation to the servo light, and the positions to irradiate the information light and the reference light to the recording layer are controlled based on the results. Therefore, there arises a problem that the reproduction is incorrect when there exists an accident error between the optical axis of the servo light and the optical axes of the information light and the reference light, and also the optical recording apparatus for recording and the optical recording apparatus for reproducing are different each other. It may be possible to employ the sampled servo system for the information light and the reference light in addition to the servo light in order to attain correct reproduction. When the sampled servo system is employed for the servo light as well as the information light and the reference light in addition, however, there arises a problem that the efficiency of recording/reproducing is lowered such as being inadequate for speeding up of the recording/reproducing. Since plural

laser lights different each other are irradiated through different routes, it is necessary that layers such as wavelength selective reflective layers are laminated on the optical recording media depending on the respective laser lights, which leading to a problem of complicated layer construction.

Accordingly, such an optical recording method, an optical recording apparatus, and an optical recording medium have not been achieved yet that are excellent in providing higher efficiency of recording/reproducing and being uninfluenced by the mismatch of optical axes of plural laser lights induced from accident errors of optical recording and optical reproducing apparatuses when carrying out recording/reproducing or control of focus or tracking by use of a laser light and also layer construction of the recording medium itself is simple, and their provisions are demanded currently.

Patent Literature 1: Japanese Patent Application Laid-Open (JP-A) No. 2002-123949
Patent Literature 2: JP-A No. 2004-265472
Patent Literature 3: JP-A No. 2003-228875

The present invention aims to solve the problems in the art described above and to attain the objects described below. That is, it is an object of the present invention to provide an optical recording method, an optical recording apparatus, and an optical recording medium that are excellent in higher efficiency of recording/reproducing and being uninfluenced by the mismatch of optical axes of plural laser lights induced from accident errors of optical recording and optical reproducing apparatuses when carrying out recording/reproducing or control of focus or tracking by use of a laser light, and also layer construction of the recording medium itself is simple.

Disclosure of Invention

The problems described above can be solved by the present invention as follows:

<1> An optical recording method, comprising:

a step of detecting pattern position, in which at least one of an information light and a reference light is irradiated to an optical recording medium, and the pattern position is detected by a reflected light, wherein the optical recording medium comprises a recording layer that records information by use of holography and a pattern that contains at least track information and address information, and

a step of recording an interference image, in which the optical axes of the information light and the reference light are displaced to a position other than the position of the pattern based on the detected pattern position information, the information light and the reference light are irradiated to the recording layer to form an interference image, and the interference image is recorded on the recording layer.

<2> The optical recording method according to <1>, further comprising a step of detecting focus position, in which at least one of the information light and the reference light is irradiated to the optical recording medium, and a focus point of the information light and the reference light is detected by the reflected light in a thickness direction of a photosensitive layer.

<3> The optical recording method according to <1> or <2>, wherein the pattern is formed at least three sites of the optical recording medium.

<4> The optical recording method according to any one of <1> to <3>, wherein the pattern comprises at least one of concave-convex patterns and patterns formed of materials with different refractive indices.

<5> The optical recording method according to any one of <1> to <4>, wherein the pattern is formed on a substrate.

<6> The optical recording method according to any one of <1> to <5>, wherein the method to detect horizontal position in the step of detecting pattern position is at least one of three beam methods, push-pull methods, and differential phase detection methods.

<7> The optical recording method according to any one of <1> to <6>, wherein the method to detect horizontal position in the step of detecting pattern position comprises irradiating the information light or the reference light to a position information pattern, receiving the reflected light, and detecting the position at which signal intensity of the reflected light is maximum.

<8> The optical recording method according to any one of <1> to <7>, wherein the method to detect horizontal position in the step of detecting pattern position comprises irradiating the information light or the reference light to a position information pattern, receiving the reflected light, and detecting the position at which signal error of the reflected light is minimum.

<9> The optical recording method according to any one of <1> to <8>, wherein the information light and the reference light are irradiated in a way that the optical axis of the information light and the optical axis of the reference light are coaxial.

<10> The optical recording method according to any one of <1> to <9>, wherein the optical recording medium comprises a first substrate, a recording layer, a pattern, and a second substrate in this order.

<11> The optical recording method according to any one of <1> to <10>, further comprising a reflective film on the surface of the pattern.
<12> The optical recording method according to <11>, wherein the reflective film is a metal reflective film.
<13> The optical recording method according to any one of <1> to <12>, wherein the optical recording medium is a reflective hologram.
<14> An optical recording apparatus, comprising:

a unit configured to detect pattern position, in which at least one of an information light and a reference light is irradiated to an optical recording medium, and the pattern position is detected by a reflected light, wherein the optical recording medium comprises a recording layer that records information by use of holography and a pattern that contains at least track information and address information, and
a unit configured to record an interference image, in which the optical axes of the information light and the reference light are displaced to a position other than the position of the pattern, the information light and the reference light are irradiated to the recording layer to form an interference image, and the interference image is recorded on the recording layer.

<15> The optical recording apparatus according to <14>, further comprising a unit configured to detect focus position, in which at least one of the information light and the reference light is irradiated to the optical recording medium, and a focus point of the information light and the reference light is detected by the reflected light in a thickness direction of a photosensitive layer.
<16> An optical recording medium, recorded by the optical recording method according to any one of <1> to <13>.
<17> An optical recording and reproducing method, comprising irradiating a reference light to the interference image, formed on the recording layer by the optical recording method according to any one of <1> to <13>, and reproducing the recorded information that corresponds to the interference image.
<18> The optical recording and reproducing method according to <17>, comprising irradiating a reference light, from the same angle of the reference light at recording the optical recording medium, to the interference image to reproduce the recorded information.

The present invention can solve the problems in the art, that is, the present invention can provide an optical recording method, an optical recording apparatus, and an optical recording medium that can record or reproduce information or perform focus or tracking control by use of a laser light at higher efficiency of recording and reproducing without being influenced by the deviation of optical axes of plural laser light induced from accident errors of optical recording and optical reproducing apparatuses, and also the layer construction of optical recording media themselves is simple.

Brief Description of Drawings

FIG. 1 is a partial cross-sectional view of the inventive optical recording medium that has an emboss pattern.
FIG. 2 is a partial cross-sectional view of the inventive optical recording medium that has a pattern layer formed from materials with different refractive indices.
FIG. 3 is a partial cross-sectional view that explains an optical recording method applied to the inventive optical recording medium.
FIG. 4 is a partial perspective view that partially shows a pattern of the inventive optical recording medium.
FIG. 5 is a partial cross-sectional view that shows scattering of an information light in the inventive optical recording method.
FIG. 6 is a perspective view of a part of the inventive optical recording medium.
FIG. 7 is an exemplary view that explains an optical system around the inventive optical recording medium.
FIG. 8 is a block diagram that shows exemplarily an entire construction of the inventive optical recording and reproducing apparatus.
FIG. 9 is an exemplary view that explains an optical system around a conventional optical recording medium.

Best Mode for Carrying Out the Invention

Optical Recording Method

The optical recording method according to the present invention comprises a step of detecting pattern position, a step of recording an interference image, and other optional steps as required.

The optical recording method according to the present invention can be carried out by the optical recording apparatus according to the present invention, and the details thereof will be apparent through the discussions of the optical recording apparatus.

The step of detecting pattern position of the inventive optical recording method can be appropriately carried out by the unit configured to detect pattern position of the inventive optical recording apparatus. The step of recording an interference image of the inventive optical recording method can be appropriately carried out by the unit configured to record an interference image of the inventive optical recording apparatus. The other steps of the inventive optical recording method can be appropriately carried out by the other units of the inventive optical recording apparatus.

Unit Configured to Detect Pattern Position

The unit configured to detect pattern position is one that irradiates an information light or a reference light to an optical recording medium, which comprises a recording layer to record information by use of holography and a pattern that records position information of the horizontal direction to the layer plane of the recording layer, and detects the site of the pattern from reflective light. Position Information of Horizontal Direction

The position information of horizontal direction may be properly selected depending on the application as long as being any information that concerns positions of horizontal direction as for the optical axes of the information light and the reference light in relation to the layer plane of the recording layer that is laminated on the recording media; for example, the position information may be address information.

The address information may be encoded position information such as 0000, 0001, 0002; position information (a, b) in which X and Y axes are defined within a layer plane each in a direction horizontal to the recording layer, and "a" and "b" represent a distance from the X and Y axes respectively; position information used for tracking servo; position information formed into wobbles; address information recorded as prepits or recording layers; and position information by recording patterns for merely returning strong or weak lights.

The position information of horizontal direction is basic information to control the irradiation sites of the information light and the reference light, therefore, the positional accuracy is required to be very high; preferably, the positional error of points of "a" and "b" is no more than 100 μm, more preferably no more than 10 μm, particularly preferably no more than 3 μm, most preferably 1 μm. As regards the positional error of no more than 100 μm, when the positional error is no more than 100 μm, the information light and the reference light can be controlled for their irradiation points, and when higher accuracy beyond 100 μm is demanded, the productivity may be lowered. When the position is shifted, there arises no problem to control provided that the degree of the shifted distance is already known and the control is carried out based on the shifted distance. It is preferred that the shifted distance is noted in optical recording media.

Pattern

The pattern may be properly selected depending on the application; preferably, the pattern can return an information light upon irradiating a reference light.

The pattern is preferably recorded such that when the axis of the reference light is shifted in relation to the pattern, the pattern is recorded to decrease the light amount depending on the shifted level. Then the shift level can be detected from the light amount. When the light amount can be measured in terms of X and Y axes independently, deviation amounts can be measured per reproduction at once. Site to Record Pattern

The site to record the pattern of the position information may be properly selected depending on the application; for example, the site may be pattern layers, prepit layers, gap layers, or cover layers having a refractive index different from those of other layers in order to form for information of horizontal sites as regards substrate plane of optical recording media, and reflective layers of the information light and the reference light.

Recording Number of Patterns

The number of the patterns may be properly selected depending on the application as long as being at least 3 per optical recording medium; for example, the number may be 3 to 10, preferably 3 to 100, more preferably 3 to 1,000. The number of the patterns may be per truck for tracking servo; in such cases also, the number may be 3 to 10, preferably 3 to 100, more preferably 3 to 1,000. When the number is above 1,000, the production efficiency may be decreased for providing the patterns of position information, i.e. it is sufficient that the number of the patterns is 1,000 at most in order to detect the position information from the pattern.

Pattern Forming Method

The method for recording the pattern may be properly selected depending on the application; for example,

methods to form a pattern on a substrate using a stamper, methods to form a pattern layer, and methods to optically record for each pattern are available.

In any of these methods, existence or nonexistence of patterns can be detected based on the difference of light paths of return lights after reflecting the information light and the reference light to form return lights. A reflective film is hence necessary to reflect lights to the surface of patterns or regions other than the patterns.

Method for Forming Pattern on Substrate by Stamper

The method to form a pattern on a substrate by the stamper is exemplified by coating a resist material on a glass substrate, exposing and developing by a lithography process to partially remove the resist material, thereby obtaining a glass master having a concave-convex pattern on the surface (master for transferring the concave-convex pattern); then the patterns are formed by use of the glass master. A conductive film is formed on the surface of the glass master by a non-electrolysis plating process and then a thin film of Ni etc. is formed by an electrolysis plating process, followed by separating the conductive film and the thin film thereby to obtain a tamper. The stamper is disposed within a mold, and resin materials such as polycarbonate are injection-molded to obtain substrates having a concave-convex pattern including pits, grooves, etc. for information propagation. In order to enhance productivity, the stamper may be produced by way of producing a metal stamper from the glass master using a non-electrolysis plating process and an electrolysis plating process, forming a thin film on the metal master by an electrolysis plating process, and separating a stamper from the metal mask; alternatively, an electrolysis plating process may be carried out repeatedly to prepare a stamper.

In addition, the methods described in JP-A Nos. 2005-166105, 2005-100546, 2004-259356, 2004-125874, 2003-85831, etc. may be employable to produce a stamper.

Method to Form Pattern Layer

The method to form as a pattern layer may be properly selected depending on the application; for example, the method may be such that fresh pattern layers are laminated to form the pattern. The pattern layer is constructed periodically from layers on a substrate etc., in which the layers contain different portions with different refractive indices i.e. a pattern portion that includes address information and track information and the other regions, and the difference of the refractive indices can be utilized for position information like servo pit patterns.

The material with different refractive indices may be properly selected depending on the application; such materials may be exemplified that are produced by the methods as exposing a pattern on a photopolymer, or patterning a material with different refractive indices. Specific materials may be properly selected depending on the application, for example, materials with higher refractive indices are $TiO_2$ ZnS; and materials with lower refractive indices are $SiO_2$ $MgF_2$, etc.; the higher refractive indices may be 1.5 to 3.0, and the lower refractive indices may be 1.3 to 2.0. When the difference of the refractive indices is no less than 0.1, the existence or non-existence of patterns can be determined depending on the difference of light paths as intended. The difference of the refractive indices is preferably no less than 0.2, more preferably no less than 0.3.

Reflective Film

The material of the reflective film may be properly selected depending on the application; preferably, the material exhibits a higher refractive index in terms of the information light and the reference light. When the wavelength of light in use is 400 to 780 nm, Al, Al alloys, Ag, Ag alloys, etc. are preferably used. When the wavelength of light in use is 650 nm or more, Al, Al alloys, Ag, Ag alloys, Au, Cu alloys, TiN, etc. are preferably used.

By use of DVD (digital video disc), for example, as the optical recording medium capable of reflecting the light and also recording and erasing information, such directory information can be recorded and erased without adversely affecting holograms as those indicative of the locations where information being recorded, the time when the information being recorded, and the locations where errors being occurred and exchanged.

The process for forming the reflective film may be properly selected depending on the application; examples thereof include various types of vapor deposition, such as vacuum vapor deposition, sputtering, plasma CVD, photo CVD, ion plating, and electron beam vapor deposition processes. Among these, sputtering processes are most preferable in view of mass productivity, film quality, and the like.

The thickness of the reflective film is preferably 50 nm or more, more preferably 100 nm or more, in order to secure sufficient reflectivity.

Method to Detect Position Information of Horizontal Direction

The method to detect the position information of horizontal direction may be properly selected depending on the application; such methods are exemplified, for example, the information light and the reference light (reproduction light) are irradiated to the position information pattern in a condition that tracking servo is carried out by irradiating a servo light, i.e. in a condition that the focus control of position adjustment in thickness direction and the tracking control of position adjustment in surface direction are carried out and thus the optical axis of the servo light is controlled at an appropriate site in order to coincide the focus point of the servo light with the track position and the address position, the reflected light is received, and the deflection degree is detected between the optical axes of the information light and the reference light and the optical axis of the servo light; when carrying out the tracking control, an offset is ridden on the tracking site, and the deflection degree is detected from the reproduction light of the position information pattern.
In cases of the former detecting method, when it can be confirmed that the information light and the reference light (reproduction light) are under a just pint condition with the horizontal position information, no accident error is detected since the optical axis of the servo light and the optical axes of the information light and the reference light (reproduction light) are identical.
When the condition is not under a just pint condition based on the detection, the tracking control is carried out for the horizontal position of the information light and the reference light (reproduction light) and the information light and the reference light (reproduction light) are displaced to represent the just pint position, and the distance is detected.
As regards the means to displace to the position of the just pint position, the information light or the reference light is irradiated to the position information pattern, the reflected light is received, and the site where the signal intensity of the reflected light comes to maximum is detected by way of moving it using a displacing device toward the arrow direction shown in FIG. 3, thereby the optical axes of the information light and the reference light can be matched with the site of the position information pattern.
The means to recognize the maximum of the signal intensity may be properly selected depending on the application; for example, peak hold methods are available.
As regards another means to move to the site of the just pint position, the information light or the reference light is irradiated to the position information pattern, the reflected light is received, and the site where the signal error of the reflected light comes to minimum is detected by way of moving it using a displacing device toward the arrow direction shown in FIG. 3, thereby the optical axes of the information light and the reference light can be matched with the site of the position information pattern.
The means to recognize the minimum of the signal error may be properly selected depending on the application; for example, peak hold methods are available.
The displacing device may be properly selected depending on the application; for example, the displacing device may be of servo mechanism.
The servo mechanism may be properly selected depending on the application; for example, the servo mechanism may be one to control the focusing length, in which the difference is transferred into a focus error signal, the signal is passed through a phase compensation drive amplifier to amplify the signal, and the signal commands a driving device to move the site of the objective lens.
The driving device may be properly selected depending on the application; for example, the driving device may be actuators, stepping motors, etc.

Detection of Distance

The method to detect the distance may be properly selected depending on the application; for example, the address information is the starting point, and X and Y axes are defined within a layer plane in horizontal direction of the recording layer as the horizontal position information, and Z axis is defined in the thickness direction of the recording layer, when the position (a, b) ($a \geq 0$, $b \geq 0$) of "a" of X axis and "b" of Y axis is recorded on the photosensitive layer, and when the address information is recorded as the position (a, b) of similar X, Y, and Z axes on the optical recording medium, the address information is detected by the information light and the reference light, and the distance to the position to be recorded of the optical axes of the information light and the reference light is defined based on the detection results.
The detection of the address information by the information light and the reference light is carried out by way of irradiating the information light and the reference light, and receiving the reflected light to take in the address of the irradiated portion, then the distances $\Delta a$ and $\Delta b$ in X and Y directions to sift the irradiated information light and reference light are determined from the position (a, b) of the address.
In this case, the length expressed by the formula below is defined as $\Delta L$ and the angle may be expressed as an acute angle $\theta$ on the basis of X and Y axes.

$$\Delta L = \sqrt{\Delta a^2 + \Delta b^2}$$

The variation ΔL may be expressed, in addition to the expression described above, in terms of (Δa'-Δa), (Δb'-Δb), Δa, Δb, Δa', or Δb', and these factors may be dealt with and utilized each independently.

The detection of the address information by the information light and the reference light may also be carried out in a way that the focus point of the optical recording medium is detected initially for the thickness direction, the focus points of the information light and the reference light are matched with the position of address information, then the position of horizontal direction is detected. The focus control is carried out for initial several sites, and sequential focus controls are unnecessary when it is estimated that the address information can be recognized even without the focus control.

The detection of the focus point for the focus control may be properly selected depending on the application; the detection method is exemplified by astigmatic methods, Foucault's methods, and critical angle methods, etc. ("Compact Disc Dokuhon" by Heitaro Nakajima and Hiroshi Ogawa, 1st ed., Nov. 10, 1986, published from Ohmsha Ltd.)

Astigmatic Method

In the astigmatic method, a variation is detected between the recording position of a recording layer formed on a disc to be detected and the focus point of the information light and the reference light. That is, the focusing length (distance between the center of objective lens and the focus point of the information light and the reference light) and the variation from the center of objective lens to the recording position of the recording layer is detected. The reflected light is taken out by disposing a beam splitter etc. on a way from the light source and the objective lens in the light path of the light beam emitted from the light source to the optical recording medium to be irradiated through the objective lens, thereby the reflected light is transmitted through a cylindrical lens to provide an image. The detection can be made in a manner that when the resulting image is circular, the focusing lengths are identical; when the resulting image is a vertically long ellipse, the optical recording medium is too close to the objective lens; and when the resulting image is a horizontally long ellipse, the optical recording medium is too far from the objective lens.

In the detection, the reflected light is divided into four, and the detection is carried out by comparing the regions of opposing corners of the resulting image. Foucault's Method

The Foucault's method has the same procedures as those of the astigmatic method described above till the reflected light is taken out by disposing a beam splitter etc. and the reflected light is transmitted through a cylindrical lens. The detection can be made in a manner that, using a prism at a portion where the reflected light transmitting through the cylindrical lens provides an image, when the resulting image is formed at the apex angle of the image, the focusing lengths are identical; when the resulting image is formed behind the apex angle, the optical recording medium is too close to the objective lens; and when the resulting image is formed before the apex angle, the optical recording medium is too far from the objective lens. The detection can be carried out in a way that one sensor is disposed to each of the reflected lights divided into two to detect the brightness of the two-divided reflective lights, and the image-forming position is detected.

Critical Angle Method

In the critical angle method, the deviation is detected between the recording position of a recording layer formed on a disc to be detected and the focus point of the information light and the reference light. That is, the focusing length (deviation between the center of objective lens and the focus point of the information light and the reference light) and the deviation from the center of objective lens to the recording position of the recording layer are detected. The focus point is detected in a manner that a prism is disposed on the way of the light source and the objective lens along such a light path that a light beam, emitted from the light source and, transmits the objective lens and irradiates the optical recording medium and the incident angle coincides with the critical angle (angle at which all of the incident light beams are reflected at the boundary surface) in relation to the central light beam of the incident light flux, the reflected light is taken out, and the reflected light is detected as to luminosity. When the optical recording medium is too close or too far from the objective lens, the focus point can be detected by distinguishing with respect to close or far from the porosity of plus or minus by making use of the fact that the reflected light, reflected at the prism, decreases the light intensity.

The method to detect the horizontal position may be properly selected depending on the application; for example, the method may be three beam methods, push-pull methods, and differential phase detection methods ("Compact Disc Dokuhon" by Heitaro Nakajima and Hiroshi Ogawa, 1st ed., Nov. 10, 1986, published from Ohmsha Ltd.)

Three Beam Method

In the three beam method, the deviation of irradiating position of servo light is detected from tracks formed on the detected disc; three beams of approximate circular main beam, sub-beam A, and sub-beam B are used. These beams are positioned and disposed on an approximate straight line in the order of sub-beam A, main beam, and sub-beam B at even intervals such that the circular center of the main beam irradiates the center of the track width, the circular under side of the sub-beam A contacts with the edge of the track width, and the circular upper side of the sub-beam B contacts with the edge of the track width.

When these beams irradiate the track at this placement, relatively weak light is reflected from the track surface and relatively intense light is reflected from areas other than the track surface, thus the deviation between the position of the three irradiated beams and the position of the track can be determined by detecting the intensity of the reflected lights.

Push-Pull Method

The push-pull method detects position deviation of the servo light that irradiates a track formed on a disc to be detected, and uses a two-divided light detector that irradiates a beam to the track and the reflected light is detected after dividing into two parts. When the beam is irradiated at the central portion of the track width, the two-divided left and right lights are identical for light intensity, and when the beam is shifted to right or left of the width direction of tracks, the intensity of the reflected light comes to weak from the track portion, and the intensity of the reflected light comes to intense from other than tracks, thus the light intensity distribution comes to asymmetric between right and left, which enables to detect the deviation.

Differential Phase Detection Method

The differential phase detection (DPD) method detects position deviation of the servo light that irradiates a track formed on a disc to be detected, and uses a four-divided light detector in which the two-divided light detector of the push-pull method is further divided. When a beam is irradiated at the central portion of the track width, the four-divided left and right lights are identical for light intensity, and when the beam is shifted to right or left of the width direction of tracks, the intensity of the reflected light comes to weak from the track portion, and the intensity of the reflected light comes to intense from other than tracks, thus the light intensity distribution comes to asymmetric between right and left by way of detecting the light intensity distribution for opposing corners in terms of the light intensity distribution of four regions of four-divided reflected light, which enables to detect the deviation.

Detection of Focus Point of Informing Light and Reference Light (Reproduction Light)

The method of detecting the focus point of the information light and the reference light (reproduction light) may be properly selected depending on the application; for example, three beam methods, push-pull methods, and differential phase detection methods may be available by way of irradiating the information light and the reference light similarly as detecting the horizontal position of the servo light.

Irradiation of Informing Light and Reference Light

The information light and the reference light may be properly selected depending on the application; for example, they may be a light beam similar as that at recording or a light beam weaker than that at recording. When the light beam is weaker than that at recording, the irradiation energy is preferably 0.1 to 10,000 $\mu J/cm^2$, more preferably 1 to 1,000 $\mu J/cm^2$, particularly preferably 10 to 100 $\mu J/cm^2$. When the irradiation energy is below 0.1 $\mu J/cm^2$, the detection of the focus point may be insufficient, and when above 10,000 $\mu J/cm^2$, recording may occur unintentionally. The information light or the reference light may be available to detect focal length since no light interference occurs. When both of the information light and the reference light are irradiated, they may be available for the detection provided that the irradiation energy is lowered to a level far from recording on optical recording media.

Unit to Record Interference Image

In the unit to record an interference image, the position on the basis of the pattern, which being detected by the step of detecting a horizontal position, is determined as to the optical axes of the information light and the reference light, the horizontal position is controlled such that the irradiation position of the information light and the reference light is shifted to a position other than the position of the pattern, the information light and the reference light are irradiated

to the region of a certain position to form an interference image, and the interference image is recorded on the photosensitive layer.

Control of Horizontal Position

In the control of the horizontal position in order to record at normal positions, the positions on X and Y axes of the optical axes of the information light and the reference light are controlled with respect to the horizontal position of the optical axes of the information light and the reference light based on the position information detected in the step of detecting a horizontal position.
Specifically, the control can be carried out based on the horizontal position of the optical axes of the information light and the reference light detected in the step of detecting a horizontal position. For example, the optical axes of the information light and the reference light is displaced by Δa and Δb on X and Y axes from the basic position (a, b) to the recording position.
As shown in FIG. 3, when the distance can be expressed by an interval and an angle, the distance can be defined from ΔL expressed by the formula below and an acute angle θ as the basis for X or Y axis. When displacing by ΔL, recording can be made on a pattern-free recording region that is formed from a convex-concave or refractive index-variable material. The reason to displace by ΔL is that when the focus points of the information light and the reference light coincide on the pattern as shown in FIG. 5, adequate recording cannot be obtained due to light scattering.

$$\Delta L = \sqrt{\Delta a^2 + \Delta b^2}$$

As regards the method to control the horizontal position, the irradiation position of the information light and the reference light can be controlled in a way that the information light or the reference light is irradiated to the pattern, the reflected light is received, and the position at which the signal intensity of the reflected light comes to maximum is detected by moving in horizontal direction.
The means to recognize the maximum of the signal intensity may be properly selected depending on the application; for example, peak hold methods are available.
The method to control the horizontal position may be properly selected depending on the application; for example, the method may be of servo mechanism.
As regards another method to control the horizontal position, the information light or the reference light is irradiated to the horizontal position pattern, the reflected light is received, and the position where the signal error of the reflected light comes to minimum is detected through moving it in horizontal direction, thereby the irradiation position of the information light and the reference light can be controlled.
The means to recognize the minimum of the signal error may be properly selected depending on the application; for example, peak hold methods are available.
The method to control the horizontal position may be properly selected depending on the application; for example, the method may be of servo mechanism. Recording of Interference Image
The recording of interference image is carried out in a way that the information light and the reference light having a coherent property are irradiated to the recording layer that records information by use of holography, an interference image (interference fringe) is formed from the information light and the reference light, and the interference image is recorded on the recording layer. The means to record the interference image may be those capable of recording a bright or dark interference fringe on a recording layer as the difference of refractive indices. The recording layer in the means is formed from a photosensitive material such as photopolymers, and the bright portion of the interference fringe has a higher refractive index since the photosensitive material causes a polymerization reaction upon light irradiation, the dark portion generates no change in the refractive index since no reaction occurs, thus there arises a difference in their refractive indices.
The method to irradiate the information light and the reference light may be properly selected depending on the application; for example, the reference light may be irradiated with a certain angle from the irradiating direction of the information light, or the information light and the reference light may be irradiated in a manner that the optical axis of the information light and the optical axis of the reference light are coaxial.
Among these, preferable is the recording on the basis of so-called Collinear system where the optical axis of the information light and the optical axis of the reference light are coaxial such that high multiple recording can be carried out and information transfer speed is higher.
A light source that can emit a laser light having a coherent property is used for the information light and the reference light. Examples of the light source include solid laser oscillators, semiconductor laser oscillators, liquid laser

oscillators, and gas laser oscillators. Among these, gas laser oscillators and semiconductor laser oscillators are preferable.

The laser light may be properly selected depending on the application; for example, a laser light having one or more wavelengths selected from 360 to 850 nm is employed. The wavelength is preferably 380 to 800 nm, more preferably 400 to 750 nm, most preferably 500 to 600 nm where the center of visible region is most viewable.

When the wavelength is below 360 nm, clear interference images may be unobtainable, and when above 850 nm, the interference fringes may come to finer and thus the corresponding adapted photosensitive materials may be unobtainable.

The irradiation energy of the laser light may be properly selected depending on the application; preferably, the irradiation energy is 0.1 to 10,000 $\mu J/cm^2$, more preferably 1 to 1,000 $\mu J/cm^2$, particularly preferably 10 to 100 $\mu J/cm^2$. When the irradiation energy is below 0.1 $\mu J/cm^2$, the recording may be impossible, and when above 10,000 $\mu J/cm^2$, recording may occur unintentionally.

Other Means

The other means are exemplified by means for fixing an interference image.

Means for Fixing Interference Image

In the means for fixing an interference image, a fixing light is irradiated to fix the interference image that is recorded on the interference image by the means for the recording the interference image. The irradiation of the fixing light is carried out on the region of the recorded interference images in an appropriate level, thereby the interference images can be efficiently fixed to enhance the storage stability, and optical recording media are obtainable that are free from problems such as noise upon reproduction.

Fixing Light

The irradiation region of the fixing light may be properly selected depending on the application; preferably, the irradiation region is the same as the region of the recording layer where the recording is carried optionally by the information light and the reference light or the region that is extended at least 1 $\mu$m outward from the recorded portion. When the fixing light is irradiated to the region that is extended above 1 $\mu$m outward from the recorded portion, the irradiation energy is excessive and inefficient since adjacent regions are irradiated.

The irradiation period of the fixing light may be properly selected depending on the application; preferably, the irradiation period is 1 ns to 100 ms at optional sites of the recording layer, more preferably 1 ns to 80 ms. When the irradiation period is shorter than 1 ns, the fixing may be insufficient, and when longer than 100 ms, the irradiation energy tends to be excessive. It is preferred that the irradiation of the fixing light is carried out within 28 hours after the interference image is recorded. When the irradiation of the fixing light is carried out after 28 hours from the recording of the interferenc e image, the signal quality of previously recorded information may be degraded.

The irradiation direction of the fixing light may be properly selected depending on the application; for example, the irradiation direction at optional sites may be the same or different with the that of the information light and the reference light. The irradiation angle is preferably 0° to 60° against the layer plane of the recording layer, more preferably 0° to 40°. The irradiation angles other than the range of the angle may lead to inefficient fixing.

The wavelength of the fixing light may be properly selected depending on the application; preferably, the wavelength at optional sites is 350 to 850 nm, more preferably 400 to 600 nm.

The wavelengths shorter than 350 nm may lead to degradation of materials, and the wavelengths longer than 850 nm may deteriorate materials due to higher temperatures.

The light source of the fixing light may be properly selected depending on the application; preferably, the light source is similar as those of the information light and the reference light in order to avoid unnecessary additional devices. The light source, similar as those of the information light and the reference light, may be used by way of irradiating the light emitted from the light source. When the same light source is used, the recording areas of interference images and irradiation areas of the fixing light can be easily conformed, and the fixing light can be efficiently irradiated.

The irradiation level of the fixing light may be properly selected depending on the application; preferably the irradiation level is 0.001 to 100 $mJ/cm^2$ at optional sites of the recording layer, more preferably 0.01 to 10 $mJ/cm^2$.

The method to irradiate the fixing light may be properly selected depending on the application; preferably, the irradiation is carried out to optional sites of the recording layer from the same light source as that of the information light and the reference light. In some cases, the irradiation may be carried out using a light emitted from other light sources.

## Optical Recording Medium

The inventive optical recording medium may be recorded by the inventive optical recording method, and the inventive optical recording medium comprises a recording layer, which records information by use of holography, on a support and a pattern that contains track information and address information; the interference image, recorded on the recording layer, is fixed by the fixing light.

The inventive optical recording medium may be of relatively thin plane holograms to record two-dimensional information or volume holograms to record numerous information, and the inventive optical recording medium may be of transmissive or reflective type. The recording mode of the hologram may be, for example, of amplitude hologram, phase hologram, brazed hologram, or complex amplitude hologram. Specifically, preferable are optical recording media of reflective type that are used for recording mode of Collinear system.

The optical recording medium comprises the recording layer, a first substrate, a second substrate, and other optional layers properly selected as required.

## Pattern

The pattern contains at least track information and address information, the details of the production method, positions to be formed, and properties are described above in relation to the optical recording method.

## Recording Layer

Information may be recorded by use of holography on the recording layers; the materials for the recording layers are those capable of changing optical properties such as absorption index or refractive-index depending on intensity of radiation, upon irradiation of electromagnetic wave having a certain wavelength.

The material of the optical recording layer may be properly selected depending on the purpose; examples thereof include (i) polymerizable photopolymers that cause a polymerization reaction upon irradiation, (ii) photorefractive materials that exhibit a photorefractive effect to modulate the refractive index by causing a spatial electric charge distribution upon irradiation, (iii) photochromic materials that modulate the refractive index by causing a molecular isomerization upon irradiation, (iv) inorganic materials such as lithium niobate and barium titanate, and (v) chalcogen materials.

The photopolymer of (i) described above may be properly selected depending on the purpose, for example, the photopolymer contains a monomer and a photoinitiator, and also other components such as sensitizer and oligomer as required.

The photopolymer may be one described in, for example, "Photopolymer Handbook" (by Kogyo Chosakai Publishing Co., 1989), SPIE manuscript vol. 3010 pp. 354-372 (1997), "Photopolymer Technology" (by The Nikkan Kogyo Shinbun, Ltd., 1989) and SPIE manuscript Vol. 3291 pp. 89-103 (1998). In addition, the photopolymers described in US Patent Nos. 5759721, 4942112, 4959284 and 6221536; WO 97/44714, WO 97/13183, WO 99/26112 and WO 97/13183; Japanese Patent Nos. 2880342, 2873126, 2849021, 3057082 and 3161230; and Japanese Unexamined Patent Publication Nos. 2001-316416 and 2000-275859 may also be available.

The method for changing optical properties by irradiating a recording light onto the photopolymer may be based on diffusion of low molecular weight components. A component may be added that diffuses toward the reverse direction with that of the polymerizing component in order to mitigate the volume change on polymerization, or a compound having an acid cleavage structure may be further added in addition to the polymer. When the recording layer is formed using a photopolymer that contains the low molecular weight component, a structure capable of sustaining liquid may be required in the recording layer. When a compound having the acid cleavage structure is added, the volume change may be controlled by compensating the expansion due to the cleavage and the constriction due to the polymer polymerization.

The monomer may be properly selected depending on the purpose; example thereof include radically polymerizable monomers having an unsaturated bond such as acrylic and methacrylic group and cationic polymerization monomers having an ether structure such as epoxy and oxetane ring. These monomers may be monofunctional or polyfunctional and may also be one utilizing a photo-crosslinking reaction.

Examples of the radically polymerizable monomers include acryloyl morpholine, phenoxyethylacrylate, isobornylacrylate, 2-hydroxypropylacrylate, 2-ethylhexylacrylate, 1,6-hexanediol diacrylate, tripropyleneglycol diacrylate, neopentylglycol PO modified diacrylate, 1,9-nonandiol diacrylate, hydroxylpivalic acid neopentylglycoldiacrylate, EO modified bisphenol A diacrylate, polyethyleneglycol diacrylate, pentaerythritol triacrylate, pentaerythritol tetraacrylate, pentaerythritol hexaacrylate, EO modified glycerol triacrylate, trimethylolpropane triacrylate, EO modified trimethylolpropane triacrylate, 2-naphtho-1-oxyethylacrylate, 2-carbazoyl-9-ylethylacrylate, (trimethylsilyloxy)dimethylsilyl propylacrylate, vinyl-1-naphthoate and N-vinylcarbazol.

Examples of the cationic polymerization monomers include bisphenol A epoxy resins, phenolnovolac epoxy resins, glycerol triglycidylether, 1,6-hexaneglycidylether, vinyltrimethoxysilane, 4-vinylphenyl trimethoxysilane, gamma-methacryloxy propyltriethoxysilane and compounds expressed by the Formulas (A) to (E) below. These may be used alone or in combination of two or more.

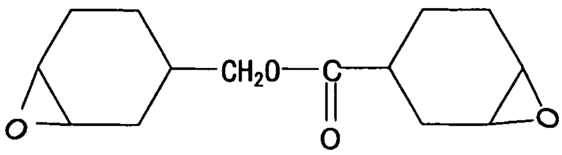

Formula (A)

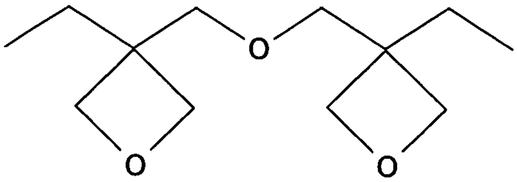

Formula (B)

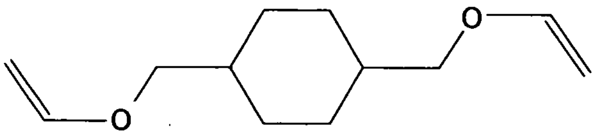

Formula (C)

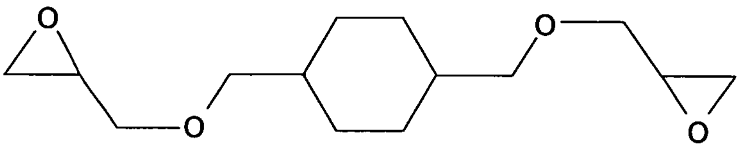

Formula (D)

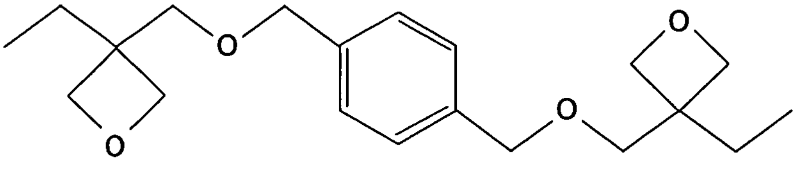

Formula (E)

The photoinitiator may be selected from materials sensitive to the recording light, for example, from those capable of inducing radical polymerization, cation polymerization, crosslinking reaction etc.

Examples of the photoinitiator include 2,2'-bis(o-chlorophenyl)-4,4',5,5'-tetraphenyl-1,1'-biimidazole, 2,4,6-tris (trichloromethyl)-1,3,5-triazine, 2,4-bis(trichloromethyl)-6-(p-methoxyphenylvinyl)-1,3,5-triazine, diphenyliodonium tetrafluoroborate, diphenyliodonium hexafluorophosphate, 4,4'-di-t-butyldiphenylodonium tetrafluoroborate, 4-diethylamino phenylbenzenediazonium hexafluorophosphate, benzoin, 2-hydroxy-2-methyl-1-phenylpropane-2-one, benzophenone, thioxanthone, 2,4,6-trimethylbenzoyldiphenylacyl phosphineoxide, triphenylbutylborate tetraethylammonium, and titanocene compounds expressed by the formulas below. These may be used alone or in combination of two or more, and may be combined with a sensitizing dye considering the wavelength of irradiating light.

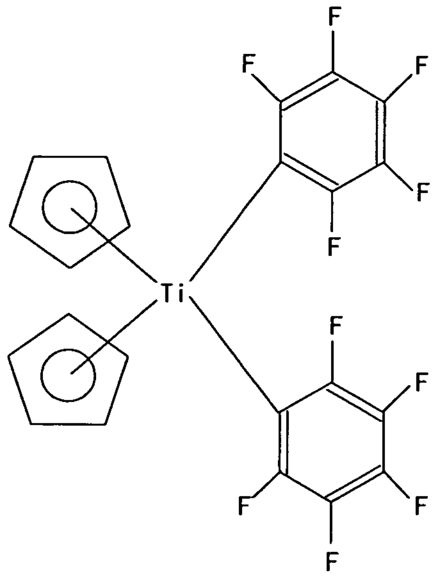

The photopolymer may be prepared by way of mixing and stirring to react the monomers, the photoinitiators, and optional other ingredients. In cases where the resulting photopolymer is of sufficiently lower viscosity, the recording layer may be made by casting processes; on the other hand, when the viscosity is excessively higher for the casting processes, the photopolymer is laid on a second substrate using a dispenser, then the second substrate is pressed onto the photopolymer similarly as lidding the second substrate onto the photopolymer to spread entirely thereby to form the recording layer.

The photorefractive material of (ii) described above may be properly selected depending on the purpose as long as the material exhibits the photorefractive effect; for example, the photorefractive material contains a charge generating material, a charge transporting material, and other ingredients as required.

The charge generating material may be properly selected depending on the purpose, examples thereof include phthalocyanine dyes/pigments such as metal phthalocyanines, non-metal phthalocyanines and derivatives thereof; naphthalocyanine dyes/pigments; azo dyes/pigments such as monoazo, disazo and triazo; perylene dyes/pigments; indigo dyes/pigments; quinacridone dyes/pigments; polycyclic quinone dyes/pigments such as anthraquinone and anthanthron; cyanine dyes/pigments; charge transfer complexes of electron acceptor substance and electron donor substance represented by TTF-TCNQ; azurenium salts; and fullerenes represented by $C_{60}$ and $C_{70}$ and demethafullerenes derived therefrom. These may be used alone or in combination of two or more.

The charge transporting material, which performs to transport holes or electrons, may be a low molecular weight or polymer compound.

The charge transporting material may be properly selected depending on the purpose; examples thereof include nitrogen-containing cyclic compounds such as indole, carbazole, oxazole, isooxazole, thiazole, imidazole, pyrazole, oxadiazole, pyrazoline, thiadiazole, triazole and derivatives thereof; hydrazone compounds; triphenyl amines, triphenyl methanes, butadienes; stilbenes; quinone compounds such as anthraquinone and diphenylquinone or the derivatives; fullerenes represented by $C_{60}$ and $C_{70}$ and derivatives thereof; pi-conjugated polymers or oligomers such as polyacetylene, polypyrrole, polythiophene and polyaniline; sigma-conjugated polymers or oligomers such as polysilane and polygerman; polycyclic aromatic compounds such as anthracene, pyrene, phenanthrene and coronene. These may be used alone or in combination of two or more.

As for the method for forming the recording layer using the photorefractive material, for example, a coating liquid is prepared by dissolving or dispersing the photorefractive material in to a solvent, a coating film is formed using the coating liquid, and removing the solvent from the coating film thereby to prepare the recording layer. Alternatively, the coating film may be formed from the photorefractive material which being liquidized by heating, the coating film is then rapidly cooled to form the recording layer.

The photochromic material of (iii) described above may properly selected depending on the purpose as long as materials are capable of causing a photochromic reaction; examples thereof include azobenzene compounds, stilbene compounds, indigo compounds, thioindigo compounds, spiropyran compounds, spirooxazine compounds, flukido compounds, anthracene compounds, hydrazone compounds and cinnamic compounds. Among these, particularly preferable are azobenzene derivatives and stilbene derivatives that undergo a structural change of cis-trans isomerization by light irradiation as well as spiropyran derivatives and spirooxazine derivatives that undergo a structural change of open or closed circular by light irradiation.

The chalcogen material (v) described above is, for example, a material that comprises a chalcogenide glass containing a chalcogen element and metal particles that is dispersed into the chalcogenide glass upon light irradiation.

The chalcogenide glass may be, without limitation, of nonoxidative amorphous material containing a chalcogen element of S, Te or Se and capable of optically doping the metal particles.

Examples of the aforementioned nonoxidative amorphous materials containing a chalcogen element include Ge-Se glasses, As-S glasses, As-Se glasses and As-Se-Ce glasses; among these, Ge-Se glasses are preferable. When the Ge-Se glasses are employed as the chalcogenide glass, the composition ratio of Ge/S may be optionally arranged depending on the wavelength of irradiated light; preferably, the chalcogenide glass has a composition expressed mainly by $GeS_2$.

The aforementioned metal particles may be properly selected depending on the purpose from those having the property to be optically doped into the chalcogenide glass by light irradiation; examples thereof include Al, Au, Cu, Cr, Ni, Pt, Sn, In, Pd, Ti, Fe, Ta, W, Zn and Ag. Among these, Ag, Au and Cu are preferable since the optical doping easily occurs, particularly preferable is Ag due to remarkable tendency to cause the optical doping.

The content of the metal particles dispersed into the chalcogenide glass is preferably 0.1% by volume to 2% by volume based on the entire volume of the recording layer, more preferably 0.1% by volume to 1.0% by volume. When the content of the metal particles is less than 0.1% by volume, the accuracy of the recording may be low due to insufficient transmissivity change by the optical doping, and when above 2% by volume, the optical doping hardly occurs in a sufficient level due to lowered optical transmissivity of the recording material.

The recording layer may be properly selected from conventional processes depending on the material; the preferable process for forming the layers is, for example, a vapor deposition process, wet film-forming process, MBE (molecular beam epitaxy) process, cluster ion beam process, molecular laminating process, LB process, printing process, and transfer process. Among these, the vapor deposition process and wet film-forming process are preferable.

The vapor deposition process may be properly selected depending on the purpose from conventional ones; specific examples thereof include a vacuum vapor deposition process, resistance heating vapor deposition process, chemical vapor deposition process and physical vapor deposition process. The chemical vapor deposition process is exemplified more specifically by a plasma CVD process, laser CVD process, heat CVD process, and gas source CVD process.

The recording layer may be formed by a wet film forming process, for example, in a manner that materials for the recording layer are dissolved and/or dispersed in a solvent to form a coating solution, then the coating solution is applied and dried. The wet film forming process may be properly selected depending on the purpose from conventional ones; examples thereof include an ink jet process, spin coating process, kneader coating process, bar coating process, blade coating process, casting process, dipping process, and curtain coating process.

The thickness of the recording layer may be properly selected depending on the purpose; the thickness is preferably 1 $\mu$m to 1000 $\mu$m, more preferably 100 $\mu$m to 700 $\mu$m.

When the thickness of the recording layer is within the preferable range, the sufficient S/N ratio may be attained even on the shift multiplex of 10 to 300; and the more preferable range may advantageously lead to more significant effect thereof. First Substrate

The first substrate may be properly selected in terms of shape, configuration, size etc. depending on the purpose; the shape may be disc, card etc.; the materials are required to assure the mechanical strength of the optical recording media. In the case that the light for recording or reproducing is directed through the substrate, it is necessary that the substrate is sufficiently transparent at the wavelength region of the employed light.

The material of the first substrate is usually selected from glasses, ceramics, resins etc.; preferably, resins are employed in particular from the view point of formability and cost.

Examples of the resins include polycarbonate resins, acrylic resins, epoxy resins, polystyrene resins, acrylonitrile-styrene copolymers, polyethylene resins, polypropylene resins, silicone resins, fluorine resins, ABS resins, and urethane resins. Among these, polycarbonate resins and acrylic resins are most preferable in view of their formability, optical characteristics, and costs. The first substrate may be appropriately prepared or commercially available.

The thickness of the first substrate may be properly selected depending on the application; the thickness is preferably 0.1 to 5 mm, more preferably 0.3 to 2 mm. When the thickness of the substrate is less than 0.1 mm, the optical disc may be deformed during its storage; and when the thickness is more than 5 mm, the weight of the optical disc may be as heavy as over-loading on drive motors.

Second Substrate

The second substrate may be identical or different from the first substrate with respect to the shape, configuration, size, material, and thickness. It is preferred in particular that the shape and size of the second substrate are identical with those of the first substrate.

Multiple numbers of address-servo areas, i.e. addressing areas linearly extending in the radial direction of the substrate, are provided on the second substrate at a predetermined interval angle, and each sector form area between adjacent address-servo areas serves as a data area. In the address-servo areas, information for performing a focus servo operation and a tracking servo operation by means of a sampled servo system and address information are recorded (or pre-formatted) in the form of emboss pits (servo pits) etc. as described above. The focus servo operation can be performed using a reflective surface of the reflective film. For example, wobble pits may be used as the information for tracking servo, in which the wobble pits are provided with a certain periodicity on tracks formed circumferentially in the optical recording media. These emboss pit pattern or wobble pits may be used as the pattern that has at least the track information and the backup address information.

Reflective Film

The reflective film is formed on the surface of the servo pit pattern of the second substrate. The material of the reflective film may be the same or similar with the material of the reflective film to form the pattern.

Other Layer

The other layers described above may be properly selected depending on the purpose; examples thereof include a gap layer and a selective reflective layer.

Gap Layer

The gap layer is provided between the recording layer and the reflective film as required for smoothing the surface of the second substrate. Moreover, the first gap layer is effective to adjust the size of the hologram formed in the recording layer. Specifically, the gap layer between the recording layer and the servo pit pattern may be effective, since the recording layer requires the interference region of some larger size between the recording/reference light and the information light.

The gap layer can be formed by, for example, applying UV curable resin etc. on the servo pit pattern by spin coating etc. and by curing the resin. The thickness of the gap layer may be properly selected depending on the purpose; the thickness is preferably 1 $\mu$m to 200 $\mu$m.

The specific embodiments of the optical recording media according to the present invention will be explained more specifically with reference to figures.

First Embodiment

FIG. 1 is a schematic cross-sectional view showing the structure of the first embodiment of the optical recording medium 23 according to the present invention. FIG. 6 is a perspective view of a part of the optical recording medium 23. In the optical recording medium 23 according to the first embodiment, servo pit pattern 3 is formed on a substrate 1 made of polycarbonate resin or glass, and the servo pit pattern 3 is coated with Al, Au, Pt or the like to form a reflective film 2. The servo pit pattern 3 of convex shape is formed on the second substrate 1 in FIG. 1 in the radial direction with a constant interval, the portions with the servo pit pattern 3 and the portions without the servo pit pattern 3 may be formed periodically. The height of the servo pit pattern 3 is 1750 angstroms (175 nm) at highest, which is sufficiently smaller than the other layers including the substrate.

When the gap layer is formed in the first embodiment, the first gap layer may be formed by applying a UV curable resin or the like on the reflective film 2 of the second substrate 1 by spin coating or the like. The gap layer is effective for protecting the reflective film 2 and also for adjusting the size of holograms created in recording layer 4. Specifically, the interference region between the recording/reference light and the information light requires a level of size in the recording layer 4, the gap layer is effectively provided between the recording layer 4 and the servo pit pattern 3.

The recording layer is laminated on the gap layer, and the recording layer 4 is sandwiched between the first substrate 5 (polycarbonate resin or glass substrate) and the second substrate 1 thereby to constitute the optical recording medium 23.

In the optical recording medium 23 of the first embodiment, the thickness of the second substrate 1 is 0.6 mm, the thickness of the recording layer 4 is 0.6 mm, the thickness of the first substrate 5 is 0.6 mm, and the total thickness

is about 1.8 mm. When the gap layer is formed on the reflective film 2, the thickness of the gap layer is preferably 100 μm.

The optical operations around the optical recording medium 23 in the first embodiment will be explained with reference to FIG. 7 in the following. The information light and the reference light are irradiated to the optical recording medium 23 in such a way that they focus on the reflective film 2 by action of an objective lens 12. Initially, the information light and the recording/reference light, emitted from a recording/reproducing laser source and treated with a spatial light modulator (SLM), pass through the polarizing plate 16 to form a linear polarization then to form a circular polarization after passing through a half mirror 17 and a quarter wave plate 15. The information light and the recording/reference light pass through the objective lens 12, enter from a light entrance/exit surface A of the optical recording medium 23, and pass through the first substrate 5 and the recording layer 4, then are reflected by the reflective film 2, and pass again through the recording layer 4 and the first substrate 5 to emit from the light entrance/exit surface A.

The emitted return light passes through the objective lens 12 and then a servo information detector (not shown) detects the servo information. The detected servo information is used for the focus servo, tracking servo, slide servo and the like. The hologram materials of the recording layer 4 may be non-photosensitive for the irradiation of the information light and the reference light since the intensity of the laser light for the information light and the reference light is sufficiently weak. The design is therefore such that the recording layer 4 undergoes no influence even when the information light and the reference light reflect diffusely at the reflective film 2.

The optical axes of the information light and the reference light are displaced by a distance ΔL from the position of the servo pit pattern so as not to record at the recording layer above the servo pit pattern based on the position of the information light and the reference light detected by the servo information, then the information light and the reference light with a recordable intensity are irradiated to the optical recording medium 23 so as to form an interference image on the photosensitive layer.

The information light and the reference light enter from the light entrance/exit surface A and interfere each other at the recording layer 4 to form an interference image therein. Then the information light and the recording/reference light pass through the recording layer 4 and are reflected at the reflective film 2 to form a return light. The reflective film is flat without projections like servo pit patterns, thus the information light and the recording/reference light are reflected to turn into the return light without diffused reflection to provide normal recording.

Fixing of Recording

A fixing light is irradiated to the recorded region within 28 hours after the interference image is recorded on the recording layer 4 thereby to fix the recording of the interference image.

Second Embodiment

FIG. 2 is a schematic cross-sectional view showing the structure of the second embodiment of the optical recording medium 24 according to the present invention. FIG. 2 is a perspective view of a part of the optical recording medium 24. The optical recording medium 24 has an apparent shape similar as that of the optical recording medium 23 as shown in FIG. 2; a pattern layer 9 is provided between the second substrate 1 and the recording layer 4 in the optical recording medium 24 meanwhile the servo pit pattern is formed on the substrate in the optical recording medium 23. The pattern layer 9 is formed periodically from portions with different refractive indices. A portion with a higher refractive index and a portion with a lower refractive index are formed alternatively with an interval of 2 μm in the radial direction of the optical recording medium 24. The thickness of the pattern layer 9 is 1 μm, the refractive index at the portion with a higher refractive index is 1.6 and the refractive index at the portion with a lower refractive index is 1.5. A reflective film 2 is formed on the surface of the second substrate.

In the optical recording medium 24, the thickness of the second substrate 1 is 1.0 mm, the thickness of the recording layer 4 is 0.6 mm, the thickness of the pattern layer 9 is 1 μm, the thickness of the first substrate 5 is 0.4 mm, and the total thickness is about 2.0 mm.

When recording or reproduction of information is carried out, the optical recording medium 24 with the configuration described above is irradiated by the information light and the reference light, tracking servo is conducted, and an interference image is formed at an appropriate position of the recording layer 4 thereby to record or reproduce the information.

Fixing of Recording

The fixing of the recording is carried out similarly as the first embodiment.

Optical Reproduction Method

In the inventive optical reproducing method, the interference image, recorded on the recording layer 4 by the inventive optical recording method, is irradiated by the reference light to reproduce the information. In order to irradiate the reference light to the interference image recorded on the recording layer 4, the objective lens 12 is finely adjusted, as shown in FIG. 7, and the focus of the reference light is set at the position where the interference image is recorded at the recording layer 4 and the irradiation is carried out. A diffracted light generates from the interference image upon the irradiation, the diffracted light transmits through the objective lens 12, dichroic mirror 13, and quarter wave plate 15, then is reflected at the half mirror 17, and the information is reproduced from the diffracted light by the detector 14.

In the optical recording method and the optical reproducing method according to the present invention, the information light with a two-dimensional intensity distribution and the reference light with almost the same intensity to that of the information light are superimposed inside the photosensitive recording layer, the resulting interference image formed inside the recording layer induces a distribution of the optical properties of the recording layer there to by record such distribution as information. On the other hand, when the recorded information is to be read (reproduced), only the reference light is irradiated onto the recording layer under a similar configuration at the time of recording, a light having a intensity distribution corresponding to the distribution of the optical property formed inside the recording layer is emitted from the recording layer as a reproducing light.

The optical recording method and the optical reproducing method according to the present invention may be carried out by use of the optical recording and reproducing apparatus explained below.

The optical recording and reproducing apparatuses applied to the optical recording method and the optical reproducing method in relation to the present invention will be explained with reference to FIG. 8.

FIG. 8 is an overall structural view of an optical recording and reproducing apparatuses in accordance with an inventive embodiment.

This optical recording and reproducing apparatus 100 is equipped with spindle 81 on which the optical recording medium 20 is disposed, spindle motor 82 that rotates the spindle 81, and spindle servo circuit 83 that controls the spindle motor 82 so as to maintain the optical recording medium at the predetermined revolution number.

The optical recording and reproducing apparatus 100 is also equipped with pickup unit 31 that irradiates the information light and the reference light onto the optical recording medium 20 so as to record information, and irradiates the reproducing reference light onto the optical recording medium so as to detect the diffracted light to thereby reproduce the information recorded at the optical recording medium 20, and driving unit 84 that enables the pickup unit 31 to move in the radius direction of optical recording medium.

The optical recording and reproducing apparatus 100 is equipped with detecting circuit 85 that detects focusing error signal FE, tracking error signal TE, and reproducing signal RF from the output signal of the pickup unit 31, focusing servo circuit 86 that drives an actuator in the pickup unit 31 so as to move an objective lens (not shown) to the thickness direction of the optical recording medium based upon the focusing error signal FE detected by the detecting circuit 85 to thereby perform focusing servo, a tracking servo circuit 87 that drives an actuator in the pickup unit 31 so as to move an objective lens (not shown) to the thickness direction of the optical recording medium based upon the tracking error signal TE detected by the detecting circuit 85 to thereby perform tracking servo, and a sliding servo circuit 88 that controls the driving unit 84 based upon the tracking error signal TE and an indication from a controller mentioned hereinafter so as to move the pickup unit 31 to the radius direction of the optical recording medium to thereby perform sliding servo.

The optical recording and reproducing apparatus 100 is also equipped with signal processing circuit 89 that decodes output data of the CMOS or CCD array described below in the pickup unit 31, to thereby reproduce the data recorded in the data area of the optical recording medium, and to reproduce the standard clock or to determine the address based on the reproducing signal RF from the detecting circuit 85, controller 90 that controls the whole optical recording and reproducing apparatus 100, and controlling unit 91 that gives various instructions to the controller 90.

The controller 90 is configured to input the standard clock or address information outputted from the signal processing circuit 89 as well as controlling the pickup unit 31, the spindle servo circuit 83, the sliding servo circuit 88 and the like. The spindle servo circuit 83 is configured to input the standard clock outputted from the signal processing circuit 89. The controller 90 contains CPU (center processing unit), ROM (read only memory), and RAM (random access memory), the CPU realizes the function of the controller 90 by executing programs of the RAM as a working area stored in the ROM.

The optical recording and reproducing apparatus, which being used for the optical recording method and the optical reproducing method according to the present invention, can record or reproduce information or perform focus or tracking control by use of the information light and the reference light; the efficiency of the recording and reproducing is higher, and high density recording can be attained without undergoing influence of the deviation of optical axes of plural laser light induced from accident errors of optical recording and optical reproducing apparatuses. In addition, excellent optical recording media, of which the layer construction is simple, can be obtained.

Examples

The present invention will be explained with reference to examples, but it should be understood that the present invention is not limited thereto at all.

Example 1

An optical recording medium can be produced in order to carry out the inventive optical recording method.

Preparation of Optical Recording Medium

An optical recording medium can be produced that comprises a first substrate, a second substrate to which a servo pit pattern is formed, and a recording layer.

The second substrate may be a conventional polycarbonate resin substrate used for DVD+RW of diameter 120 mm and plate thickness 0.6 mm. As shown in FIG. 4, concave-like address is formed with a depth of 100 nm and a diameter of 1,000 nm, and a servo pit pattern is formed with a pitch of 2 μm in circumferential direction and a pitch of 1.6 μm in radial direction on the surface of the substrate by use of a stamper.

Initially, a reflective film is formed on the surface of the servo pit pattern of the second substrate. The material of the reflective film is aluminum (Al). An Al reflective film of 100 nm thick is formed by a DC magnetron sputtering process. A polycarbonate film of 100 μm thick is used as a gap layer on the reflective film and can be adhered by a UV curable resin.

The photopolymer coating liquid of the ingredients below can be prepared as the material of the recording layer.

Ingredients of Photopolymer Coating Liquid

| | |
|---|---|
| di(urethaneacrylate) oligomer *1) | 59 parts by mass |
| isobornyl acrylate | 30 parts by mass |
| vinyl benzoate | 10 parts by mass |
| polymerization initiator *2) | 1 parts by mass |

*1) by Echo Resins Co., ALU-351
*2) by Ciba Specialty Chemicals, Co., Irgacure 784

The resulting photopolymer coating liquid is laid on a second substrate using a dispenser, then an first substrate of a polycarbonate resin of diameter 12 cm and thickness 0.6 mm is pressed to the photopolymer, thereby a disc edge and the first substrate can be laminated by the adhesive.

A flange portion is provided at the disc edge in order to adjust the thickness of the photopolymer layer to 500 μm, and the thickness of the photopolymer layer can be defined by adhering the first substrate to the disc edge and removing the excessive photopolymer to overflow. Consequently, the optical recording medium of Example 1 is prepared. FIG. 1 is a schematic cross-sectional view that shows a configuration similar as this Example.

Distance of Optical Axis of Informing Light and Reference Light

An information light of wavelength 532 nm is irradiated to the pattern portion of the optical recording medium at a irradiation energy of no more than 25 μJ/cm$^2$ at which no recording occurs, the reflected light is received, the information light is subjected to tracking servo to the just pint position, the address of the optical axis of the information light is detected, and the optical axis of the information light is moved by a certain distance ΔL so as to adjust the recording position on the basis of the address. Focus servo may be carried out as required to detect the address, and the tracking servo can be carried out after adjusting the focus point of the information light.

When the address is defined as a starting point and X and Y axes are assumed in a layer surface horizontal to the recording layer, for example, the distance ΔL shown in FIG. 3 can be recognized as values such as (2 μm, 3μm) using the distances from X and Y axes. Recording cannot be carried out at the photosensitive layer of the address, thus the recording position is displaced to the predetermined region to be recorded. The distance ΔL indicates the displacing distance in order to record at the predetermined recording region other than the previously formed address portions. The reason, why the recording region is selected from other than address portions, is that when the focus point of the information light and the reference light coincide on the concave-convex pattern at which the address portions are formed

as shown in FIG. 5, recording quality may degrade since adequate interference images are not formed due to light scattering at concave-convex portions.

Recording on Recording Layer

When the information light and the reference light are irradiated, it should be confirmed whether the displacement is carried out at a predetermined distance ΔL (e.g., 2 μm from X axis, 3μm from Y axis) and then the recording layer is irradiated.

The recording on the recording layer is carried out, as shown in FIG. 7, in a way that the information light and the recording/reference light are irradiated to the recording layer 4 at an irradiation energy of about 50 $\mu J/cm^2$ for 100 nsec to form an interference image thereby to record the interference image on the recording layer.

Evaluation of Quality to Reproduce Recording

The evaluation of the quality to reproduce the recording is carried out by the optical recording and reproducing apparatus 100 shown in FIG. 8 in a way of irradiating the reference light to the optical recording medium, generating a diffracted light from the interference image, and reading it by a detector 14 shown in FIG. 9 to reproduce the original information, consequently, it can be confirmed whether errors (number/frame) are few.

Industrial Applicability

The optical recording method according to the present invention can record or reproduce information or perform focus or tracking control by use of a laser light at higher efficiency of recording and reproducing without being influenced by the deviation of optical axes of plural laser light induced from accident errors of optical recording and optical reproducing apparatuses, and also the optical recording method according to the present invention is excellent in that simple layer construction of optical recording media themselves can be provided, thus is employed as optical recording methods of hologram type capable of high density image recording.

The optical recording medium according to the present invention can exhibit higher efficiency of recording and reproducing when recording or reproducing information or performing focus or tracking control by use of laser light and can undergo no influence by the deviation of optical axes of plural laser light induced from accident errors of optical recording and optical reproducing apparatuses, thus the optical recording medium according to the present invention can be widely used as excellent ones having a simple layer configuration themselves.

## Claims

**1.** An optical recording method, comprising:

a step of detecting pattern position, in which at least one of an information light and a reference light is irradiated to an optical recording medium, and the pattern position is detected by a reflected light, wherein the optical recording medium comprises a recording layer that records information by use of holography and a pattern that contains at least track information and address information, and

a step of recording an interference image, in which the optical axes of the information light and the reference light are displaced to a position other than the position of the pattern based on the detected pattern position information, the information light and the reference light are irradiated to the recording layer to form an interference image, and the interference image is recorded on the recording layer.

**2.** The optical recording method according to claim 1, further comprising a step of detecting focus position, in which at least one of the information light and the reference light is irradiated to the optical recording medium, and a focus point of the information light and the reference light is detected by the reflected light in a thickness direction of a photosensitive layer.

**3.** The optical recording method according to claim 1 or 2, wherein the pattern is formed at least three sites of the optical recording medium.

**4.** The optical recording method according to any one of claims 1 to 3, wherein the pattern comprises at least one of concave-convex patterns and patterns formed of materials with different refractive indices.

5. The optical recording method according to any one of claims 1 to 4, wherein the pattern is formed on a substrate.

6. The optical recording method according to any one of claims 1 to 5, wherein the method to detect horizontal position in the step of detecting pattern position is at least one of three beam methods, push-pull methods, and differential phase detection methods.

7. The optical recording method according to any one of claims 1 to 6, wherein the method to detect horizontal position in the step of detecting pattern position comprises irradiating the information light or the reference light to a position information pattern, receiving the reflected light, and detecting the position at which signal intensity of the reflected light is maximum.

8. The optical recording method according to any one of claims 1 to 7, wherein the method to detect horizontal position in the step of detecting pattern position comprises irradiating the information light or the reference light to a position information pattern, receiving the reflected light, and detecting the position at which signal error of the reflected light is minimum.

9. The optical recording method according to any one of claims 1 to 8, wherein the optical recording medium comprises a first substrate, a recording layer, a pattern, and a second substrate in this order.

10. The optical recording method according to any one of claims 1 to 9, wherein the optical recording medium is a reflective hologram.

11. The optical recording method according to any one of claims 1 to 10, wherein the information light and the reference light are irradiated in a way that the optical axis of the information light and the optical axis of the reference light are coaxial.

12. An optical recording apparatus, comprising:

a unit configured to detect pattern position, in which at least one of an information light and a reference light is irradiated to an optical recording medium, and the pattern position is detected by a reflected light, wherein the optical recording medium comprises a recording layer that records information by use of holography and a pattern that contains at least track information and address information, and
a unit configured to record an interference image, in which the optical axes of the information light and the reference light are displaced to a position other than the position of the pattern based on the detected pattern position information, the information light and the reference light are irradiated to the recording layer to form an interference image, and the interference image is recorded on the recording layer.

13. The optical recording apparatus according to claim 12, further comprising a unit configured to detect focus position, in which at least one of the information light and the reference light is irradiated to the optical recording medium, and a focus point of the information light and the reference light is detected by the reflected light in a thickness direction of a photosensitive layer.

14. An optical recording medium, recorded by the optical recording method according to any one of claims 1 to 11.

15. An optical recording and reproducing method, comprising irradiating a reference light to the interference image, formed on the recording layer by the optical recording method according to any one of claims 1 to 11, and reproducing the recorded information that corresponds to the interference image.

16. The optical recording and reproducing method according to claim 15, comprising irradiating a reference light, from the same angle of the reference light at recording the optical recording medium, to the interference image to reproduce the recorded information.

FIG. 1

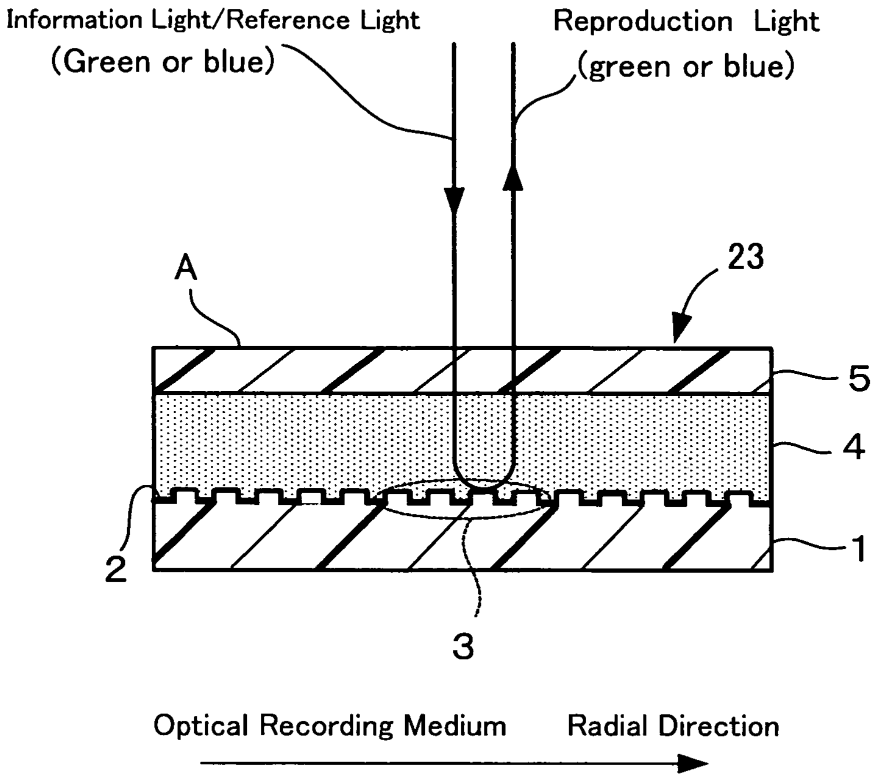
Information Light/Reference Light
(Green or blue)
Reproduction Light
(green or blue)
A
23
5
4
2
1
3
Optical Recording Medium Radial Direction

FIG. 2

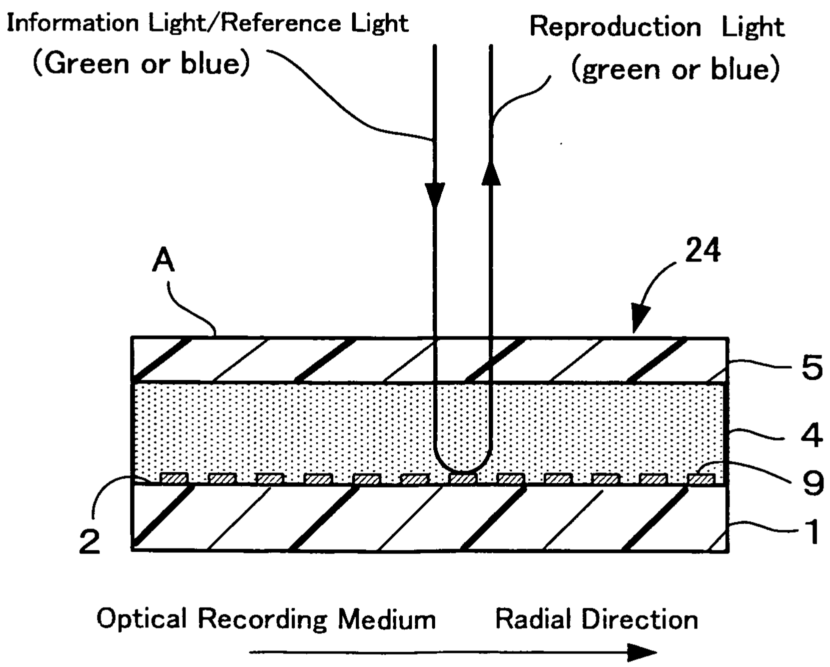
Information Light/Reference Light
(Green or blue)
Reproduction Light
(green or blue)
A
24
5
4
9
2
1
Optical Recording Medium Radial Direction

FIG. 3

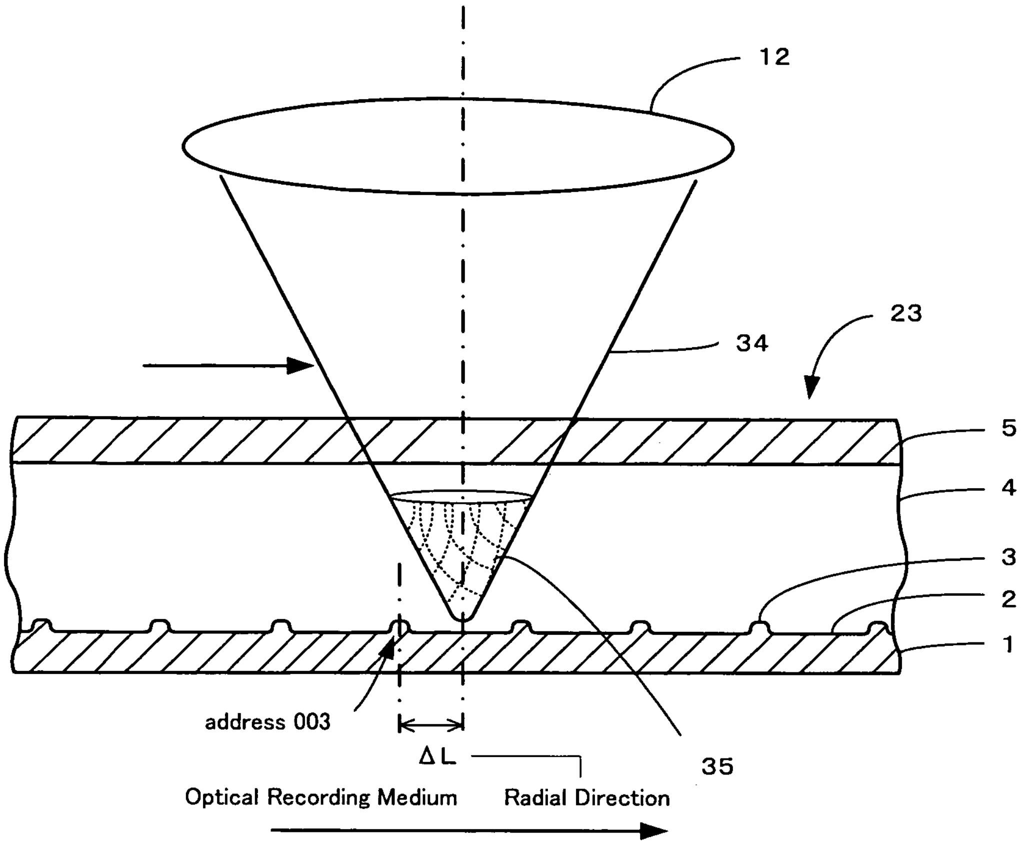
12
23
34
5
4
3
2
1
address 003
ΔL
35
Optical Recording Medium
Radial Direction

FIG. 4

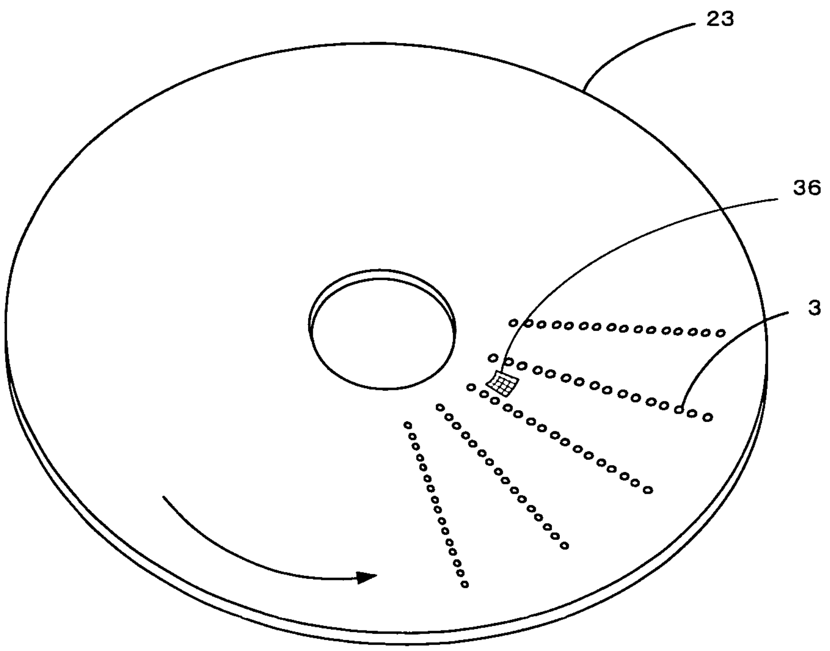
23
36
3

FIG. 5

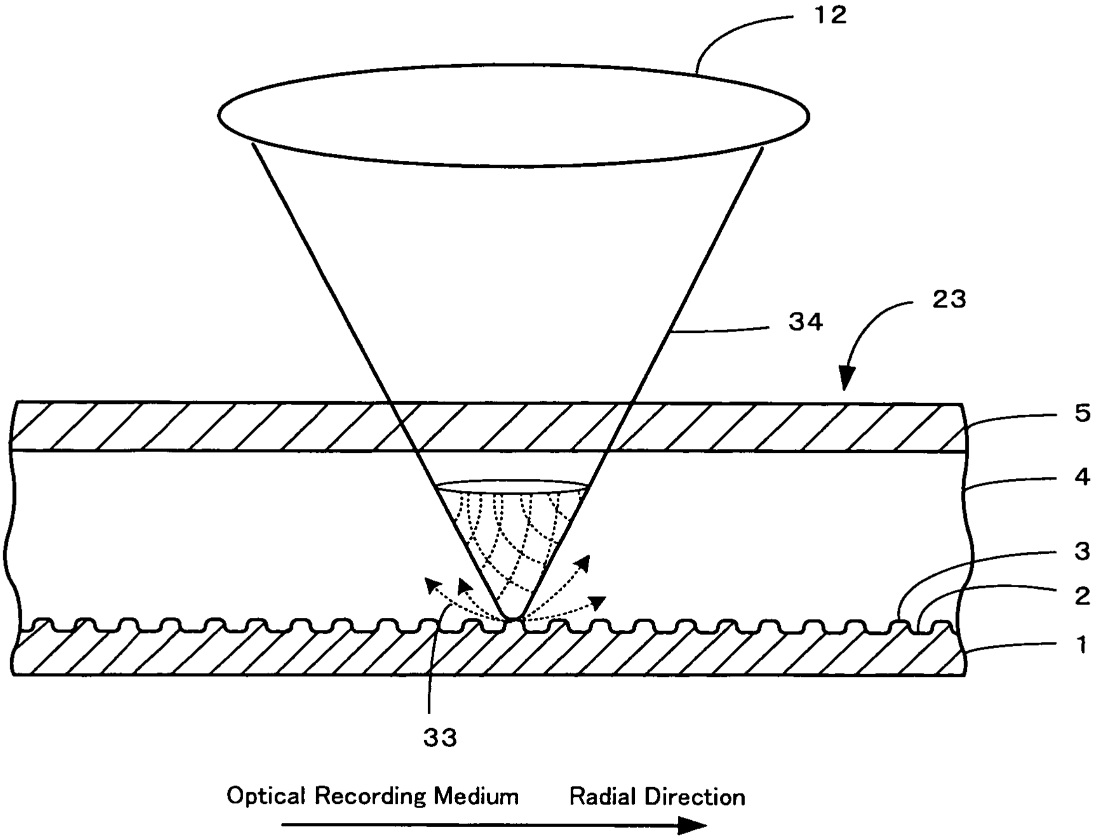
12
34
23
5
4
3
2
1
33
Optical Recording Medium Radial Direction

FIG. 6

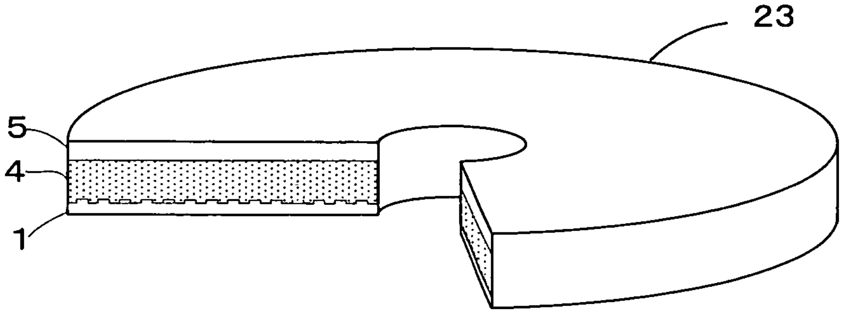
23
5
4
1

FIG. 7

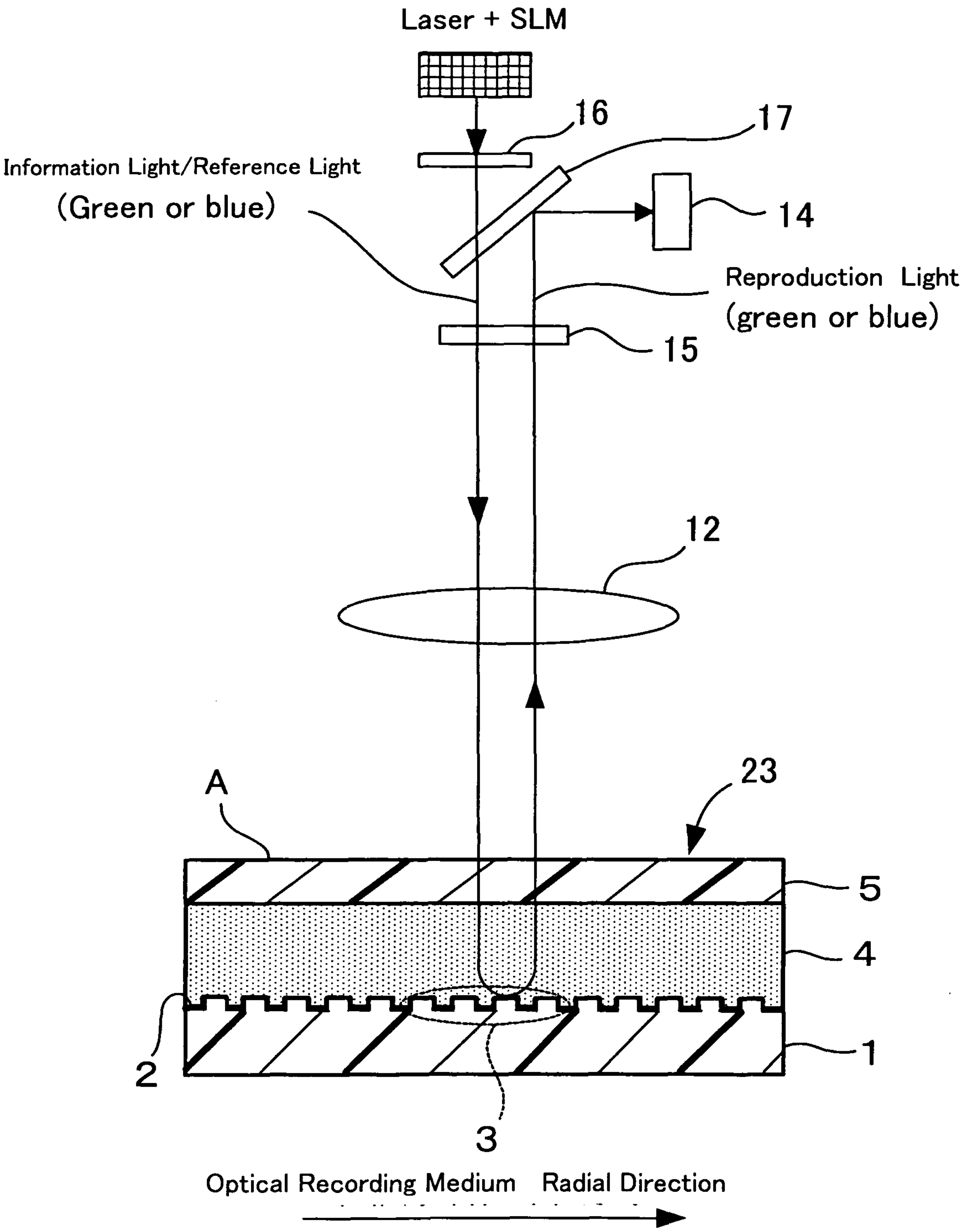
Laser + SLM
16
17
Information Light/Reference Light
(Green or blue)
14
Reproduction Light
(green or blue)
15
12
A
23
5
4
2
1
3
Optical Recording Medium Radial Direction

FIG. 8

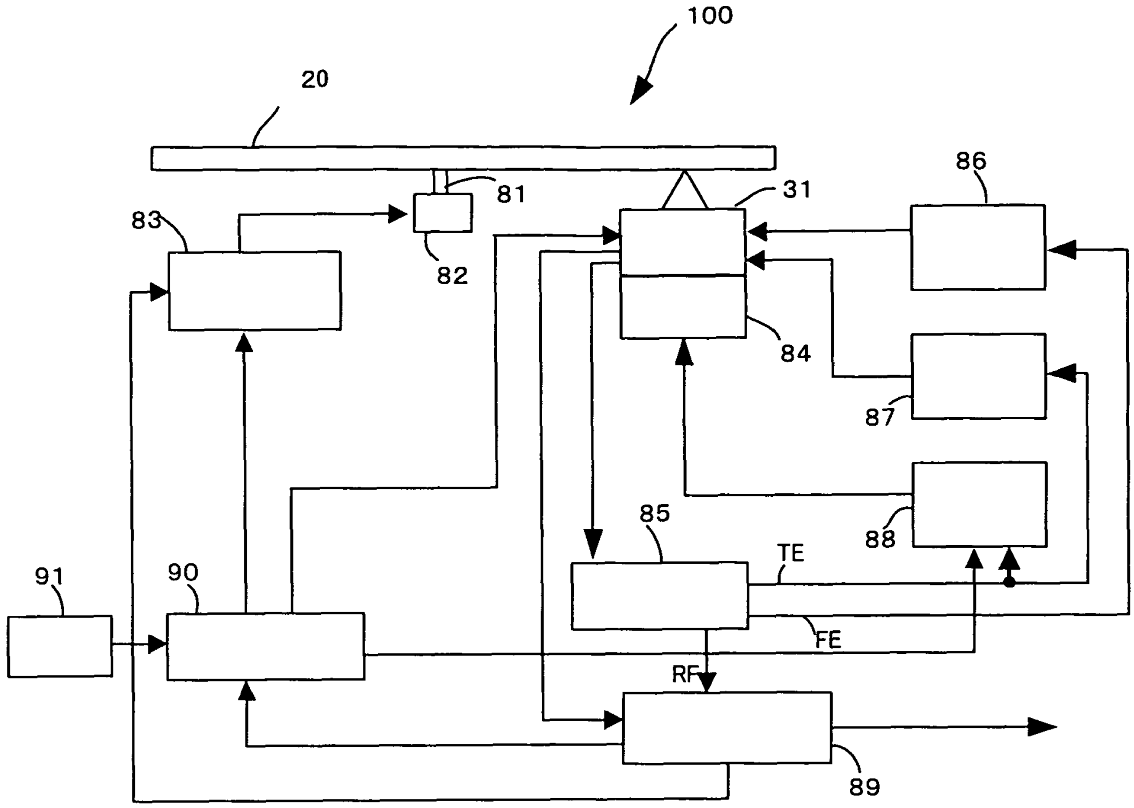

FIG. 9

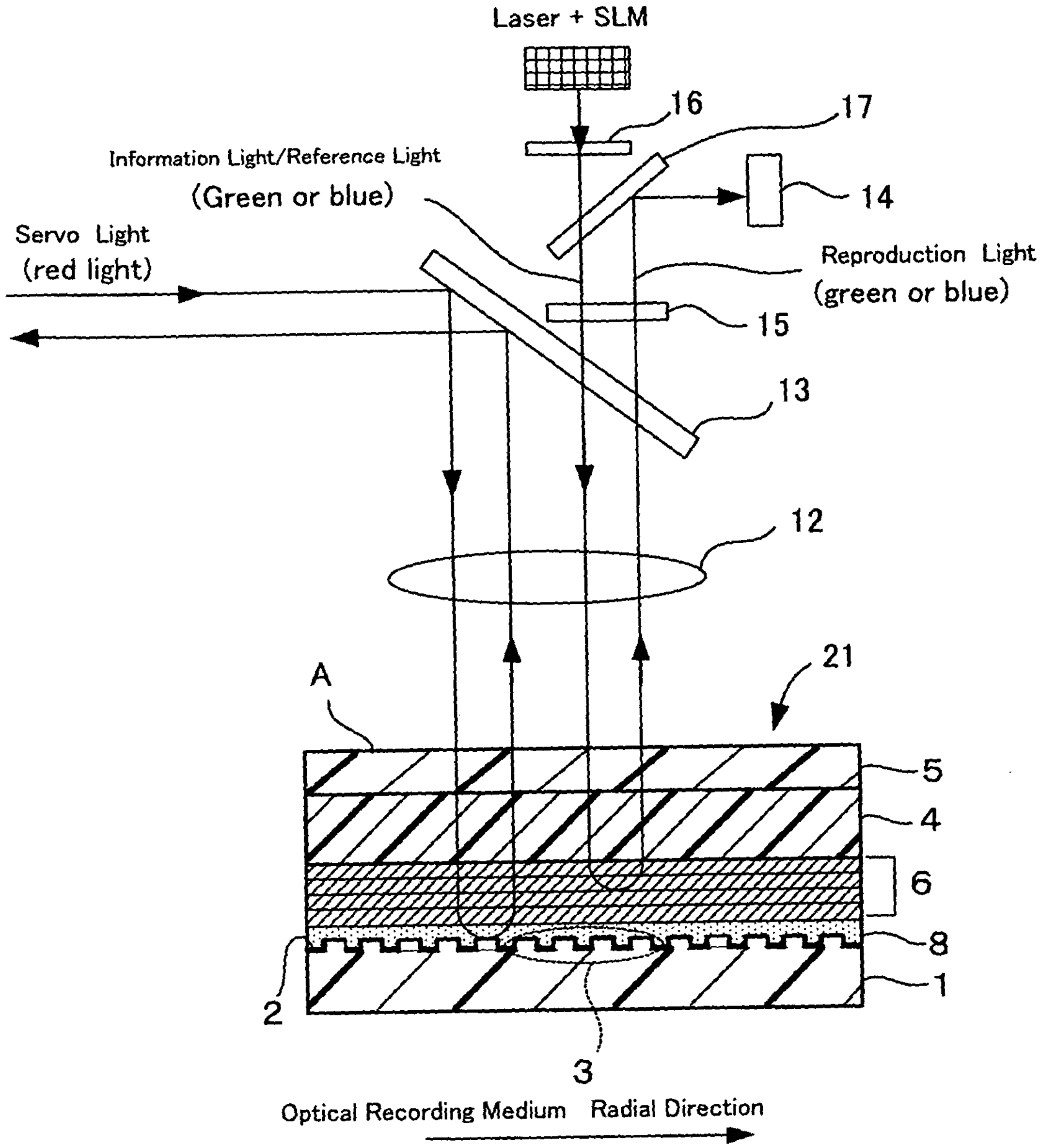
Laser + SLM
16
17
Information Light/Reference Light
(Green or blue)
14
Servo Light
(red light)
Reproduction Light
(green or blue)
15
13
12
21
A
5
4
6
8
1
2
3
Optical Recording Medium Radial Direction

**INTERNATIONAL SEARCH REPORT**

International application No.
PCT/JP2006/314650

A. CLASSIFICATION OF SUBJECT MATTER
*G11B7/0065*(2006.01), *G11B7/09*(2006.01), *G03H1/26*(2006.01)

According to International Patent Classification (IPC) or to both national classification and IPC

B. FIELDS SEARCHED

Minimum documentation searched (classification system followed by classification symbols)
G11B7/0065, G11B7/09, G11B7/095, G03H1/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-311936 A (Hideki HORIGOME), 09 November, 1999 (09.11.99), Full text; Figs. 1 to 75 & US 2002/0114027 A1 & US 2003/0063342 A1 & US 2006/0050341 A & EP 1065658 A1 & WO 99/044195 A1 & AU 2640799 A & AU 0754252 B & CN 1299507 A & CA 2322006 A | 1-16 |
| A | WO 2004/021339 A1 (Pioneer Electronic Corp.), 11 March, 2004 (11.03.04), Full text; Figs. 1 to 28 & US 2005/0237896 A & EP 1562185 A1 & CN 1672195 A | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 October, 2006 (16.10.06) | Date of mailing of the international search report<br>24 October, 2006 (24.10.06) |
| Name and mailing address of the ISA/<br>Japanese Patent Office<br>Facsimile No. | Authorized officer<br><br>Telephone No. |

Form PCT/ISA/210 (second sheet) (April 2005)

INTERNATIONAL SEARCH REPORT

International application No.
PCT/JP2006/314650

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-182910 A (Pioneer Electronic Corp.), 07 July, 2005 (07.07.05), Full text; Figs. 1 to 12 & US 2005/0135217 A1 | 1-16 |
| P,X | JP 2005-302149 A (TDK Corp.), 27 October, 2005 (27.10.05), Full text; Figs. 1 to 8 & WO 2005/101385 A | 1-3,5-6,10, 12-16 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002123949 A
- JP 2004265472 A
- JP 2003228875 A
- JP 2005166105 A
- JP 2005100546 A
- JP 2004259356 A
- JP 2004125874 A
- JP 2003085831 A
- US 5759721 A
- US 4942112 A
- US 4959284 A
- US 6221536 B
- WO 9744714 A
- WO 9713183 A
- WO 9926112 A
- JP 2880342 B
- JP 2873126 B
- JP 2849021 B
- JP 3057082 B
- JP 3161230 B
- JP 2001316416 A
- JP 2000275859 A


### Non-patent literature cited in the description


- **HEITARO NAKAJIMA ; HIROSHI OGAWA.** Compact Disc Dokuhon. Ohmsha Ltd, 10 November 1986
- Photopolymer Handbook. Kogyo Chosakai Publishing Co, 1989
- *SPIE manuscript,* 1997, vol. 3010, 354-372
- Photopolymer Technology. The Nikkan Kogyo Shinbun, Ltd, 1989
- *SPIE manuscript,* 1998, vol. 3291, 89-103